# EUROPEAN PATENT APPLICATION

(11) **EP 1 881 719 A1**
(43) Date of publication of application: **23.01.2008**
(21) Application number: 06291168.0
(22) Date of filing: 18.07.2006
(51) Int. Cl.: H04Q 7/38

(54) **Method for providing QoS to a terminal in I-Wlan access mode**

(71) Applicant: Alcatel Lucent, 75008 Paris (FR)
(72) Inventor: Feron, Didier, 44240 La Chapelle sur Erdre (FR); Monchanin, Jean-Pierre, 44750 Campbon (FR); Desorbay, Eric, 44750 Campbon (FR)
(74) Representative: El Manouni, Josiane

(57) **Abstract**

One object of the present invention is a method for access to mobile PS services, by a Mobile Station in an Interworking - WLAN (I-WLAN) access mode, said method comprising a step of:
- providing QoS support by higher layer control protocol.

## Description

The present invention generally relates to mobile communication systems.

Detailed descriptions of mobile communication systems can be found in the litterature, in particular in Technical Specifications published by standardisation bodies such as in particular 3GPP (3^{rd} Generation Partnership Project).

It is simply recalled that in a mobile communication system a Mobile Station (MS) (or User Equipment (UE)) has access to mobile services delivered by a Core Network (CN) via an Access Network (AN). It is also recalled that there are different types of services, such as, depending on the type of traffic, CS (Circuit-Switched) and PS (Packet Switched) services.

Mobile services have traditionally been delivered to Mobile Stations via an Access Network corresponding to a Radio Access Network RAN, allowing relatively high mobility but at relatively high cost for the users.

Typical examples of RAN are GERAN (GSM/EDGE Radio Access Network, where EDGE stands for Enhanced Data rates for GSM Evolution, and GSM stands for Global System for Mobile communications) and UTRAN (UMTS Terrestrial Radio Access Network, where UMTS stands for Universal Mobile Telecommunication System). A description of RANs such as GERAN or UTRAN can be found in particular in 3GPP Technical Specifications.

Now, there is an evolution towards fixed/mobile convergence, allowing mobile services to be delivered to users at lower cost in environments requiring lower mobility, such as in particular indoor environments.

An example of fixed/mobile convergence access technology is I-WLAN (Interworking WLAN). A description of WLAN technology can be found in particular in the IEEE 802.11 specification family (where IEEE stands for Institute of Electrical and Electronic Engineers).

A system description for interworking between 3GPP systems and WLANs can be found in particular in 3GPP TS 23.234. The intent of 3GPP - WLAN interworking is to extend 3GPP services and functionality to the WLAN access environment. There are different Interworking Scenarios, with different interworking requirements. In particular, the aim of Scenario 3 is to extend the access to 3G PS services to subscribers in a WLAN environment.

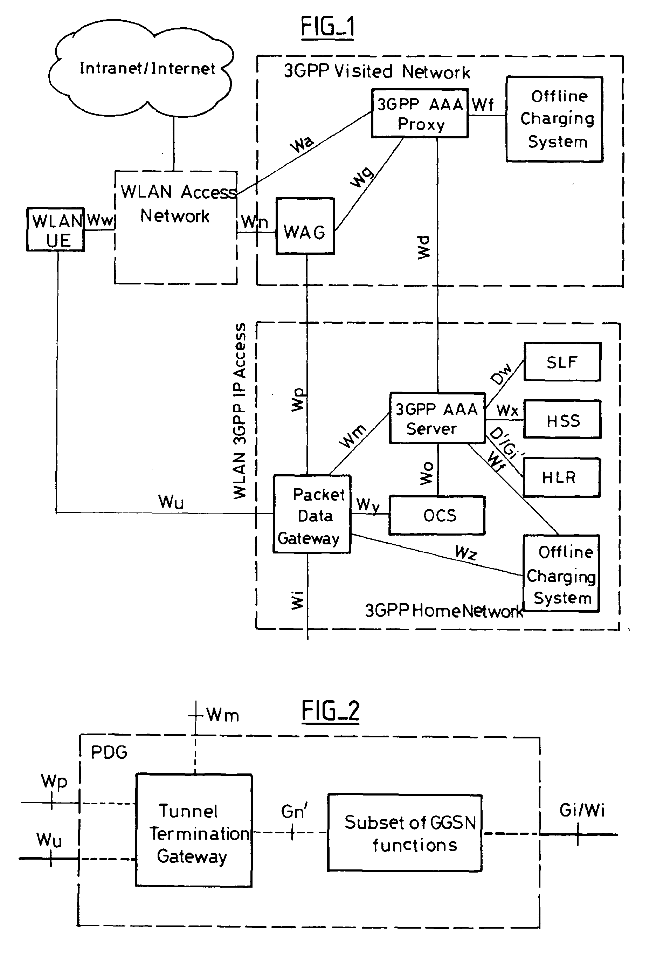

3GPP-WLAN interworking architecture, as recalled in figure 1 taken back from 3GPP TS 23.234, includes the following elements, in the 3G Home Network:
- 3GPP AAA Server, which terminates AAA signalling with the WLAN and interfaces with other 3G components, such as the HSS (Home Subscriber Server) or HLR (Home location Register),
- PDG (Packet Data Gateway), to which user data traffic is routed by establishing an appropriate secure tunnel (also referred to as IPSec Tunnel), and which routes user data traffic to an external PDN (Packet Data Network). The external PDN is selected based on the 3G PS service requested by the UE, and the 3G PS service requested by the UE is identified by the UE by means of a W-APN (Wireless - Access Point Name) which is included by the UE in the AAA signalling messages. The W-APN is used by the PDG for service authorization, for tunnel establishment; authorization information is retrieved by the PDG from the 3GPP AAA server through th Wm-interface.

3GPP-WLAN interworking procedures, as described in particular in 3GPP TS 23.234 include:
- WLAN Access Authentication and Authorisation
- W-APN resolution and Tunnel establishment (IPSec tunnel establishment).

3GPP TS 23.234 also describes a PDG implementation re-using GGSN (Gateway GPRS Support Node) functionality, whereby the PDG is composed of two components: TTG (Tunnel Termination Gateway) and Subset of GGSN functions, as recalled in figure 2 taken back from 3GPP TS 23.234. The tunnel set-up in the above recalled Tunnel establishment procedure is terminated by the TTG of the PDG, and the set-up of a GTP (GPRS Tunneling Protocol) tunnel is triggered towards the GGSN part of the PDG. Each IPSec Tunnel is mapped one-to-one to a GTP Tunnel. The GTP tunnel is established as defined in 3GPP TS 29.060.

Another example of fixed/mobile convergence access technology is UMA/GA (Unlicensed Mobile Access / Generic Access), a description of which can be found in particular in UMA/3GPP specifications (in particular 3GPP TS 43.318 and 3GPP TS 44.318). As indicated in 3GPP TS 43.318 for example, Generic Access to the A/Gb interfaces is an extension of GSM/GPRS mobile services that is achieved by tunnelling Non Access Stratum (NAS) protocols between a Mobile Station and the Core Network over an IP network.

In the example of UMA/GA, the Access Network is called UMAN/GAN (Unlicensed Mobile Access Network / Generic Access Network).

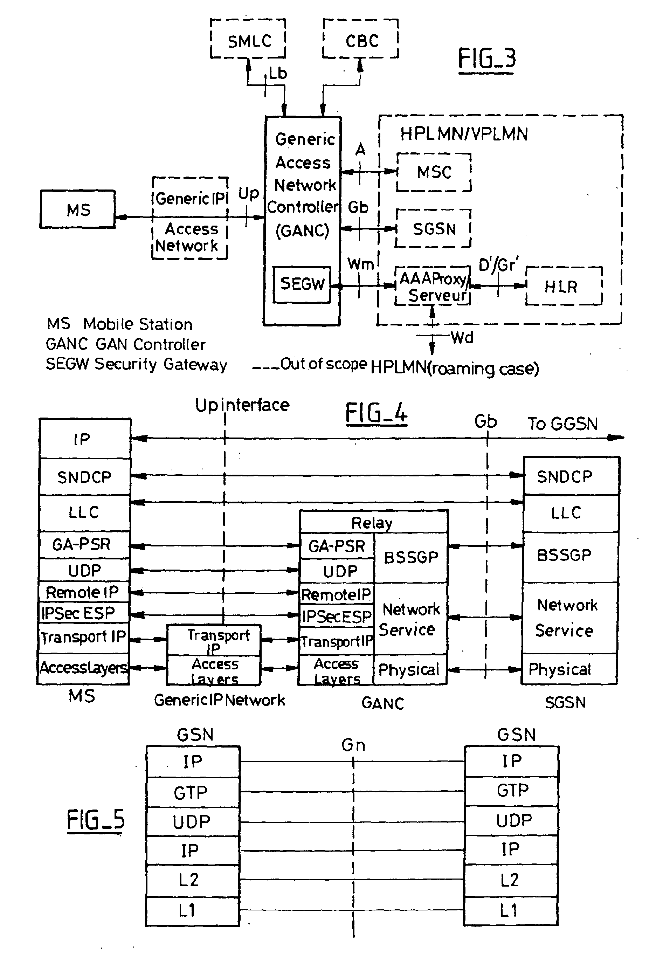

As recalled in figure 3, taken back from 3GPP TS 43.318 for example, the Access Network UMAN/GAN includes a Network Controller UNC/GANC (Unlicensed Network Controller / Generic Access Network Controller).

The UNC/GANC appears to the CN as a BSS (Base Station Subsystem) of GERAN. The UNC/GANC is interconnected with the CN via the standardized interfaces (i.e. A-interface and Gb-interface) defined for GERAN A/Gb mode. Transaction control (e.g. CC (Call Control), SM (Session Management)) and user services are provided by the Core Network (e.g. MSC/VLR and SGSN/GGSN).

The UNC/GANC includes a SEGW (Security Gateway). All control and user plane traffic over the Up-interface between MS and UNC/GANC is sent through the IPsec tunnel that is set up between the MS and the UNC/GANC-SEGW as a result of the authentication procedure.

The SEGW of UNC/GANC interfaces with a AAA server over the Wm-interface as defined by 3GPP TS 29.234 for 3GPP-WLAN interworking. The AAA server is used to authenticate the MS when it sets up a secure tunnel. Only a subset of the Wm functionalities is required for UMA/GA application (authentication procedure).

The PS Domain User Plane UMAN/GAN protocol architecture is recalled in figure 4 taken back from 3GPP TS 43.318 for example.

A description of the Up-interface protocols that are specific to UMA/GA can be found in particular in UMA/3GPP Technical Specifications (in particular 3GPP TS 43.318 and 3GPP TS 44.318). A description of Gb-interface protocols can be found in particular in 3GPP TS 44.018. A description of protocols at the MS-SGSN interface can be found in particular in 3GPP TS 44.064 and 3GPP TS 44.065.

The PS domain user plane CN protocol architecture is recalled in figure 5.

User data traffic generated by higher layer protocols is tunnelled over IP transport accross the CN PS domain using a GTP-U tunnel set-up at PDP (Packet Data Protocol) context activation.

It is recalled that in the PS domain control plane, higher layer protocols in charge in particular of management of PDP contexts and GTP-U tunnels include:
- Session Management (SM) protocol,
- GTP-C (GPRS Tunneling Protocol - Control plane).

A description of SM protocol can be found in particular in 3GPP TS 24.008. A description of GTP protocol can be found in particular in 3GPP TS 29.060.

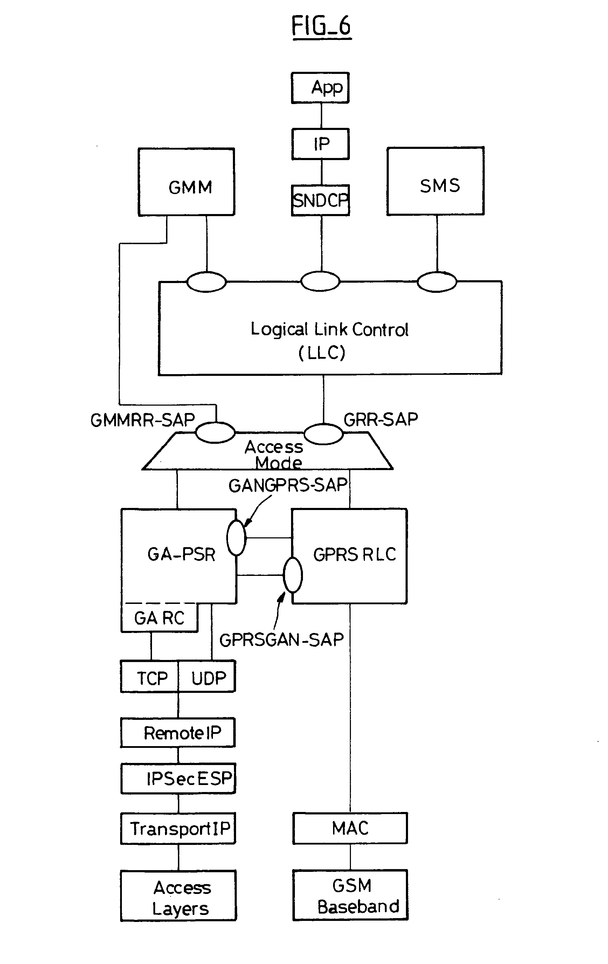

The PS domain - MS (Mobile Station) architecture is recalled in figure 6 taken back from 3GPP TS 43.318. An access mode switch is provided to switch between GPRS and UMA/GA modes and to use UMA/GA mode when the MS is within UMA/GA coverage.

The present invention recognizes that the above-recalled state of the art raises a number of problems, or needs to be improved, at least for the following reasons.

Among other benefits, UMA is presently an economical alternative for indoor 2G coverage (essentially for voice and low-speed GPRS).

Now, operators (for whom quality and subscriber satisfaction is particularly important when deploying new services), are showing an increasing interest in particular in Wifi for 3G indoor coverage (in particular due to UMTS limitations for indoor coverage).

However, UMA GPRS access is based on a 2G protocol stack which has a number of disadvantages:
- cost of Frame Relay transport, still widely used on Gb interface,
- Gb BSSGP overhead,
- 2G SGSN not sized for high-bandwidth services.

Because of these technical limitations, GPRS service over UMA is currently economically viable only for low-speed service.

On the other hand, for I-WLAN access, there is currently no QoS support (while QoS support is an important issue for PS services). Furthermore, for each W-APN activation one IPSec tunnel must be setup.

To overcome these limitations, the following solutions could be used:
- Gb over IP in a classical UMA/GA segregated architecture with distinct UNC/GANC and SGSN nodes,
- Collapsed UMA architecture with a combined UNC-PS / SGSN node,
- "Hybrid-UMA", consisting in a combination of the two solutions recalled above, i.e. I-WLAN (Interworking WLAN) and UMA/GA, where the terminal uses I-WLAN scenario 3 for PS domain.

However such solutions in particular have the following drawbacks:
- For proper operation of segregated architecture with Gb over IP, all SGSNs need to be upgraded with Gb over IP functionality;
- Likewise, proper operation of collapsed architecture requires all SGSNs to be upgraded with combined UNC/GANC and SGSN functionality;
- Using interworking I-WLAN scenario 3 in the terminal requires the handling of at least two IPSec tunnels, one for UMA and one for I-WLAN. This can be an issue in terms of resources for the Security Gateway as well as for some terminals that support one IPSec tunnel only (due to chipset limitation). Furthermore, there is no QoS support for I-WLAN access.

It is an object of the present invention to solve part or all of such problems, or to avoid part or all of such drawbacks.

These and other objects are achieved, in one aspect of the present invention, by a method for access to mobile PS services, by a Mobile Station in an Interworking - WLAN (I-WLAN) access mode, said method comprising a step of:
- providing QoS support by higher layer control protocol.

In another aspect, said method comprises a step of:
- providing said QoS support by Session Management protocol.

In another aspect, said method comprises a step of:
- providing said QoS support by PDP context management procedures.

In another aspect, said method comprises a step of:
- indicating by the Network to the Mobile Station its capability regarding said QoS support.

In another aspect, said method comprises a step of:
- indicating by the Mobile Station to the Network its capability regarding said QoS support.

In another aspect, said method comprises a step of:
- indicating by the Network to the Mobile Station a signaling channel on which to perform signaling related to said QoS support.

In another aspect, said method comprises a step of:
- tunneling said higher layer control protocol between said Mobile Station and a Packet Data Gateway (PDG) or Tunnel Termination Gateway (TTG).

In another aspect, said method comprises a step of:
- providing said QoS support by performing PDP context modification procedure, where said PDP context corresponds to a PDP context implicitly activated as a result of performing W-APN activation procedure.

In another aspect, said method comprises a step of:
- providing said QoS support by performing Secondary PDP context activation procedure, where a Primary PDP context corresponds to a PDP context implicitly activated as a result of performing W-APN activation procedure.

In another aspect, said method comprises a step of:
- providing said indication during a W-APN activation procedure.

In other aspects, said Mobile Station supporting Interworking - WLAN (I-WLAN) access mode and Unlicensed Mobile Access (UMA) /Generic Access (GA) mode:
- said method comprises a step of tunneling said higher layer control protocol between said Mobile Station and a Network Controller (UNC/GANC) of said UMA/GA Access Network,
- said method comprises a step of providing said QoS support by PDP context activation procedure,
- said procedure includes the steps of sending a request to a AAA server, and receiving QoS information in response from said AAA server,
- said method comprises a step of providing said QoS support by Secondary PDP context activation procedure,
- said method comprises a step of providing said indication during set-up procedure of a unique secure tunnel for Interworking - WLAN (I-WLAN) access mode and Unlicensed Mobile Access (UMA) mode/Generic Access (GA) mode.

These and other objects are achieved, in another aspect of the present invention, by a method for access to mobile PS services, by a Mobile Station (MS)supporting Interworking - WLAN (I-WLAN) access mode and Unlicensed Mobile Access (UMA) mode/Generic Access (GA) mode, said method comprising a step of:
- establishing a unique secure tunnel for Interworking - WLAN (I-WLAN) access mode and Unlicensed Mobile Access (UMA) mode/Generic Access (GA) mode.

In another aspect, said method comprises a step of:
- in Interworking - WLAN (I-WLAN) access mode, encapsulating traffic in a Generic Routing Encapsulation (GRE) tunnel that is carried inside said unique secure tunnel.

Advantageously, said secure tunnel corresponds to a IPSec tunnel.

In another aspect, said method comprises a step of:
- indicating by the Network to the Mobile Station information related to GRE tunnel management.

In another aspect, said method comprises a step of:
- providing said indication together with signaling related to QoS support.

In another aspect, said method comprises a step of:
- providing said QoS support by higher layer control protocol.

In another aspect, said method comprises a step of:
- providing said QoS support by Session Management protocol.

In another aspect, said method comprises a step of:
- providing said QoS support by PDP context management procedures.

In another aspect, said method comprises, in said Unlicensed Mobile Access (UMA) mode/Generic Access (GA) mode:
- a step of transferring user data packets using a tunnelling protocol over IP transport between UMA/GA Access Network and mobile network.

In another aspect, said method comprises:
- a step of transferring user data packets using GPRS Tunnelling Protocol (GTP) over IP transport between a Network Controller (UNC/GANC) of said UMA/GA Access Network and a Gateway GPRS Support Node (GGSN) of said mobile Network.

In another aspect, said method comprises:
- a step of terminating higher layer control protocols at said Network Controller, under the control of an Authentication Authorization Accounting (AAA) proxy/server.

These and other objects are achieved, in another aspect of the present invention, by a Mobile Station, an entity of a Unlicensed Mobile Access Network (UMAN)/Generic Access Network (GAN) (such as in particular Network Controller UNC/GANC), and an entity of a mobile Network (such as in particular Packet Data Gateway (PDG), Tunnel Termination Gateway (TTG), AAA server), for performing a method according to the present invention.

These and other objects of the present invention will become more apparent from the following description taken in conjunction with the accompanying drawings:
- figure 1 si intended to recall 3GPP-WLAN interworking architecture,
- figure 2 is intended to recall a PDG implementation re-using GGSN functionality,
- figure 3 is intended to recall UMA/GA architecture,
- figure 4 is intended to recall the PS domain user plane UMAN/GAN protocol architecture,
- figure 5 is intended to recall the PS domain user plane CN protocol architecture,
- fugure 6 is intended to recall the PS domain UMA/GA MS architecture,
- figure 7 is intended to illustrate an example of system architecture, according to the present invention,
- figure 8 is intended to illustrate an example of PS domain user plane protocol architecture according to the present invention,
- figure 9 is intended to illustrate an example of PS domain control plane protocol architecture according to the present invention,
- figure 10 is intended to illustrate an example of PS domain MS architecture according to the present invention,
- figure 11 is intended to illustrate an example of IPSec tunnel flows according to the present invention when a One Tunnel Mode is used,
- figure 12 is intended to illustrate an example of IPSec tunnel setup procedure according to the present invention when the One Tunnel Mode is used,
- figure 13 is intended to illustrate an example of I-WLAN W-APN activation procedure according to the present invention,
- figure 14 is intended to illustrate an example of a secondary PDP context activation procedure according to the present invention when the One Tunnel Mode is not used,
- figure 15 is intended to illustrate an example of PDP context activation procedure according to the present invention when the One Tunnel Mode is used,
- figure 16 is intended to illustrate an example of procedure of PDP context deactivation from MS according to the present invention when the One Tunnel Mode is used,
- figure 17 is intended to illustrate an example of procedure of PDP context deactivation from Network according to the present invention when the One Tunnel Mode is used,
- figure 18 is intended to illustrate an example of a secondary PDP context activation procedure according to the present invention when the One Tunnel Mode is used,
- figure 19 is intended to illustrate an example of a WLAN subscriber profile change according to the present invention when the One Tunnel Mode is used,
- figure 20 is intended to illustrate an example of UMA de-registration procedure according to the present invention.

The purpose of the invention addresses in particular the following points:
- provides a way to address the Qos for the case of the I_WLAN 3GPP access;
- provides a way to use only one tunnel IPSec Tunnel for I-WLAN 3GPP access in which all the traffic to the different W-APN are multiplexed;
- Provides a two nodes architecture for the case of UMA, where the GANC by-passes the SGSN, the authentication/Authorization is done by using the Wm interface;
- Provides a convergence solution for I-WLAN 3GPP and UMA access (PS domain).

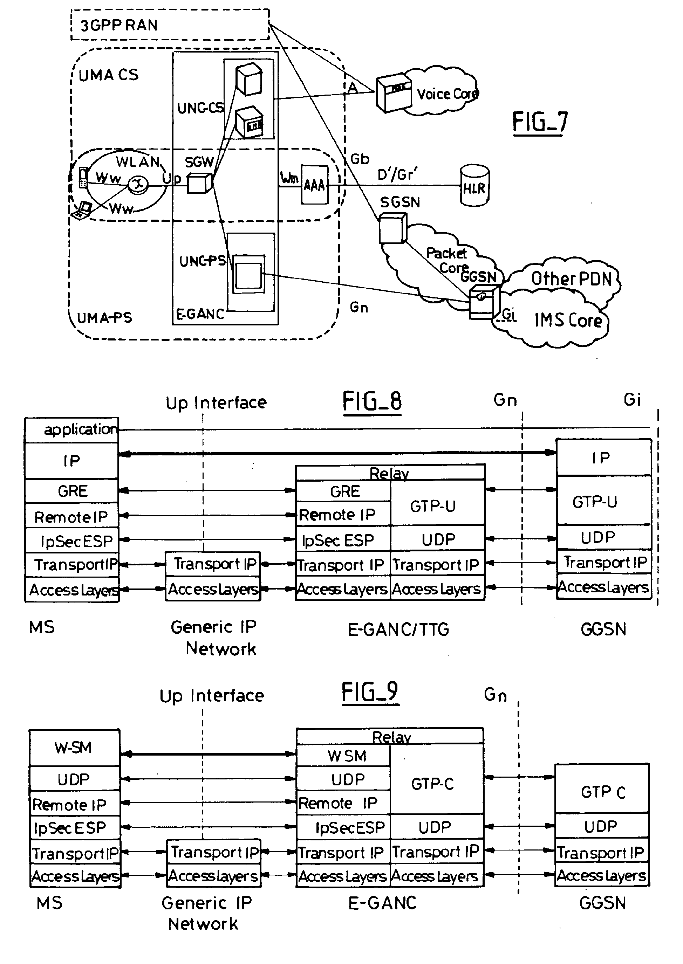

In the example of system architecture illustrated in figure 7, the system comprises:
- MS/UE,
- 3GPP RAN,
- UMAN/GAN,
- CN.

In the example of system architecture illustrated in figure 7, UMAN/GAN comprises:
- WLAN,
- UNC/GANC-CS (UNC/GANC part handling CS services),
- UNC/GANC-PS (UNC/GANC part handling PS services),
- SGW (UNC/GANC part corresponding to Security Gateway),
- AAA server, connected to SGW via Wm-interface.

In the example of system architecture illustrated in figure 7, CN comprises:
- Voice Core Network (CN part handling CS services), comprising MSC nodes connected to 3GPP RAN and to UNC-CS via A-interface,
- Packet Core Network (CN part handling PS services), comprising GGSN nodes (connected to other networks or subnetworks, such as PDN or IMS (IP Multimedia Subsystem) and SGSN nodes connected to 3GPP RAN via Gb-interface,
- HLR (Home Location Register) connected to AAA server via D'/Gr'-interface.

In figure 7 as well as in the following description, a UNC/GANC supporting UMA/GA evolutions proposed by the present invention will also be called E-GANC.

In one aspect, the present invention proposes to interface UMA/GA -PS with the CN via a fast path (i.e. a path without Gb-interface, i.e. no BSSGP, no SGSN). In particular, the present invention proposes to connect UNC-PS to GGSN via Gn-interface.

In another aspect, the present invention proposes a new access mode for MS in WLAN environment, also called hereinafter "HSI mode" (High Speed Internet mode), providing I-WLAN 3GPP access enhanced with QoS support.

In yet another aspect, the present invention proposes two HSI access modes for the MS:
- a first HSI mode, also called hereinafter "Standard I-WLAN 3GPP access with QoS":

In this first mode there is still one IPSec tunnel per W-APN, however the MS has the capability to request a Qos for the full W-APN or per microflow inside the W-APN tunnel,
- a second HSI mode, also called hereinafter One Tunnel Mode :

This second mode is common to I-WLAN and UMA solutions. A unique IPSec tunnel is setup for UMA access as well as I-WLAN 3GPP access for any W-APN. The traffic between the W-APN and the MS being encapsulated in a GRE tunnel (Generic Routing Encapsulation tunnel) that is carried inside the IPSec tunnel.

For both modes, the MS should be able to operate either in standard UMA mode or with the HSI mode for backward comptability with legacy standard UMA solution. Same case for the I-WLAN 3GPP access.

By way of example, in the following description, a combination of these different aspects of the present invention will be considered; nevertheless it should be understood that these different aspects of the present invention can be envisaged separately, or according to other combinations than the one considered in the following by way of example.

Referring to figure 8, there is illustrated an example of PS domain user plane protocol architecture according to the present invention.

Protocols at the Up-interface between MS and E-GANC/TTG include, from higher to lower layers:
- GRE,
- Remote IP,
- IPSec ESP,
- Transport IP,
- Access Layers.

Protocols at the Gn-interface between E-GANC/TTG and GGSN include, from higher to lower layers:
- GTP-U,
- UDP,
- Transport IP,
- Access Layers.

Protocols at the MS-GGSN interface include:
- IP Layer.

Protocols at the interface between MS and an Application Server (not illustrated) include:
- Application layer.

A description of GRE (Generic Routing Encapsulation) can be found in particular in RFC 2890 published by IETF (Internet Engineering Task Force).

The E-GANC performs a GRE tunnel - Gn direct adaptation (fast path without Gb interface, i.e. no BSSGP, no SGSN).

The GRE stack is only used in the case of the One Tunnel HSI Mode.

Referring to figure 9, there is illustrated an example of PS domain control plane protocol architecture according to the present invention.

Protocols at the Up-interface between MS and E-GANC include, from higher to lower layers:
- W-SM,
- UDP,
- Remote IP,
- IPSec ESP,
- Transport IP,
- Access Layers.

Protocols at the Gn-interface between E-GANC and GGSN include, from higher to lower layers:
- GTP-C,
- UDP,
- Transport IP,
- Access Layers.

On the MS side, the Session Management (3GPP TS 24.008) SM protocol is enhanced (W-SM) with some information related to the GRE tunnel management (exchange of the keys IE used in the GRE tunnel) and the IP frame DSCP setting.

The transport protocol for W-SM between the MS and the E-GANC is UDP/IP. To address security requirements, the signaling protocol messages are carried within the IPSEC tunnel setup for UMA access.

The E-GANC terminates the W-SM protocol (or the SM protocol if the One Tunnel Mode is not used). It uses the services of the AAA server for W-APN authorization without performing the authentication since this is already done. The expected returned information from AAA server are:
- The Qos and bandwidth information related to the W-APN and the user,
- The charging characteristics,
- The IP address of the MS for that W-APN (optional).

Upon successful authorization it uses the procedures defines in the 3GPP TS 29.060 (Gn) to setup the GTP-U tunnel between the GGSN and the E-GANC.

The PDP context management procedures disclosed in 3GPP TS 24.008 include procedures such as a PDP Context Activation procedure, whereby:
- the MS sends to the network an Activate PDP Context Request including QoS parameters enabling the MS to request a given QoS,
- the network determines if it can provide the requested QoS,
- the network sends to the MS an Activate PDP Context Accept, including QoS parameters indicating to the MS which QoS the network can provide.

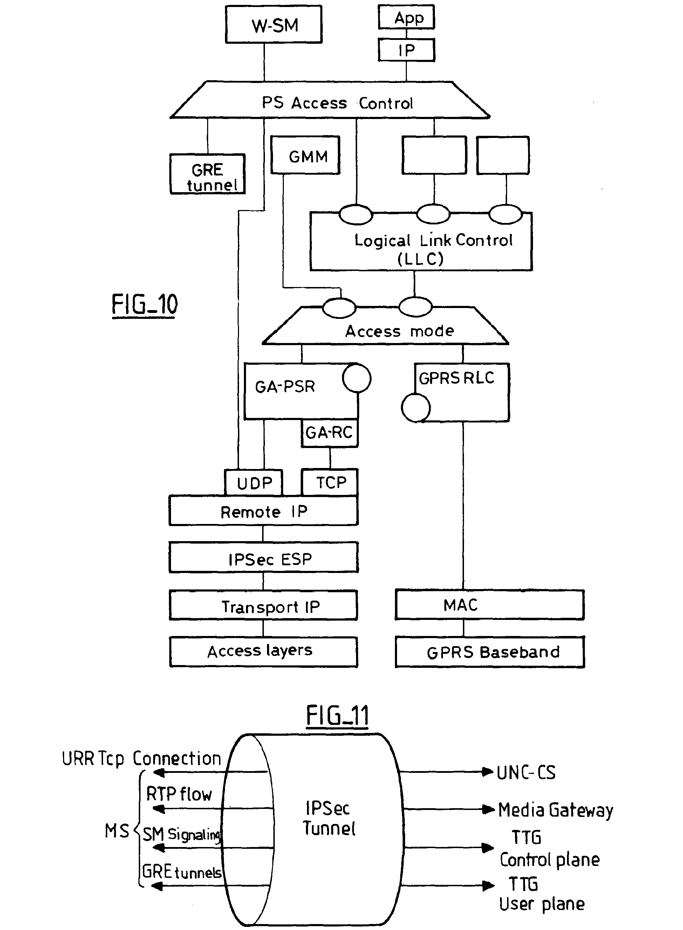

Figure 10 is intended to illustrate an example of PS domain MS architecture (UMA) according to the present invention.

Further to the access mode switch recalled in figure 6, enabling to switch between GPRS mode and UMA/GA mode, and to use UMA/GA mode when the MS is within UMA/GA coverage, there is provided a PS access controller, enbling to switch between the HSI (High Speed Internet) mode and a standard mode (i.e. one of the standard GPRS and UMA/GA modes).

The following layers are enhanced or introduced:
- SM layer is adapted for GRE tunnel management;
- PS Access Control is introduced for switching between the High Speed Internet and the standard UMA modes;
- GRE Tunnel is introduced for traffic tunneling in HSI mode.

Figure 11 is intended to illustrate an example of IPSec tunnel flows in the One Tunnel Mode according to the present invention.

In this example, different flows inside the IPSec tunnel include:
- URR TCP connection (corresponding to CS control plane)
- RTP flow (corresponding to CS user plane),
- SM signalling (corresponding to PS control plane),
- GRE tunnel(s) (corresponding to PS user plane).

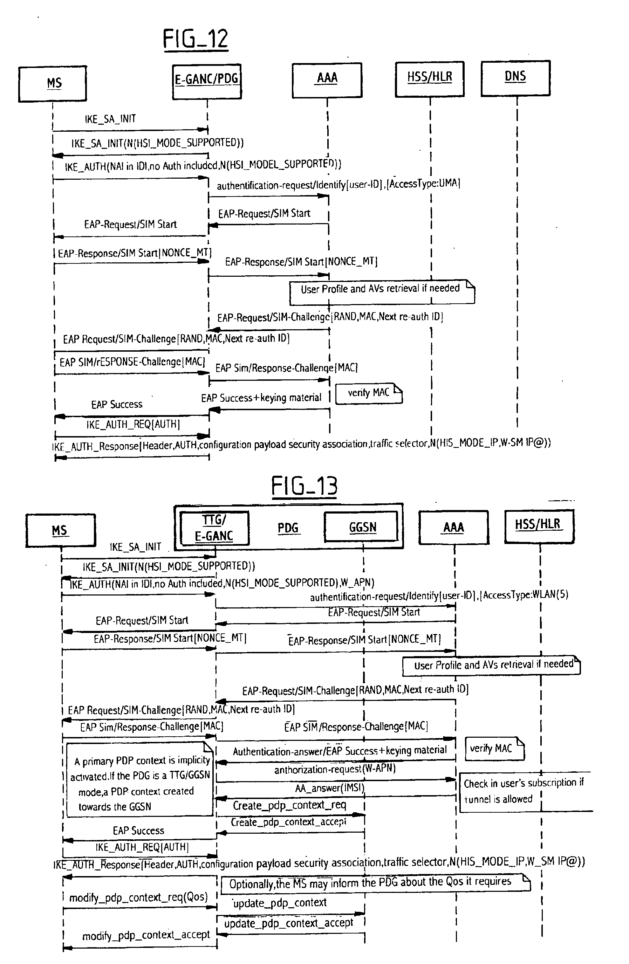

Figure 12 is intended to illustrate an example of IPSec tunnel setup procedure in the One Tunnel Mode according to the present invention.

That procedure is the same as the one described in 3GPP TS 43.318, except the following modifications enabling the MS and the E-GANC (or PDG) to exchange their capability regarding the HSI mode during the setup of the IPSec tunnel:
- In the IKE_SA_INIT message, the E-GANC indicates that it supports the HSI mode for the PS domain by notifying HSI_MODE_SUPPORTED (append of a notify payload to the IKE message).
- In the IKE_AUTH message, if the MS supports that mode, it appends the HSI_MODE_SUPPORTED notifier. For the case of I-WLAN access, if the MS wants to use the One Tunnel Mode, it should omit the W-APN information.
- On the first message of the Authentication Request with the AAA server, the E-GANC indicates that the Authentication is performed for HSI mode. In the case of One Tunnel Mode illustrated in figure 12, this information is noted "Access type : UMA". This information is required to handle the W-APN authorization in a way different of the standard I-WLAN access.
- In the last IKE_AUTH response message, the E-GANC provides the MS with the IP address of the W-SM Signalling entity. This is achieved through a notify payload with the HSI_MODE_IP notify message type, the data associated to that code being the IP address of the signaling plane, noted "W-SM IP@" in figure 12.

Figure 13 is intended to illustrate an example of I-WLAN W-APN activation procedure according to the present invention.

The procedure is almost the same as the one illustrated in figure 12, except that in this case, the MS sets its W-APN in the IKE_AUTH message.

In that case the behaviour of the AAA server for the session is the same as the one defined in 3GPP TS 33.234. However, the MS has the capability to request a specific Qos and to create secondary PDP context per microflow for addressing the Qos. The MS can request a PDP Context Modification procedure (where said PDP Context corresponds to a PDP context implicitely activated as a result of activating a W-APN).

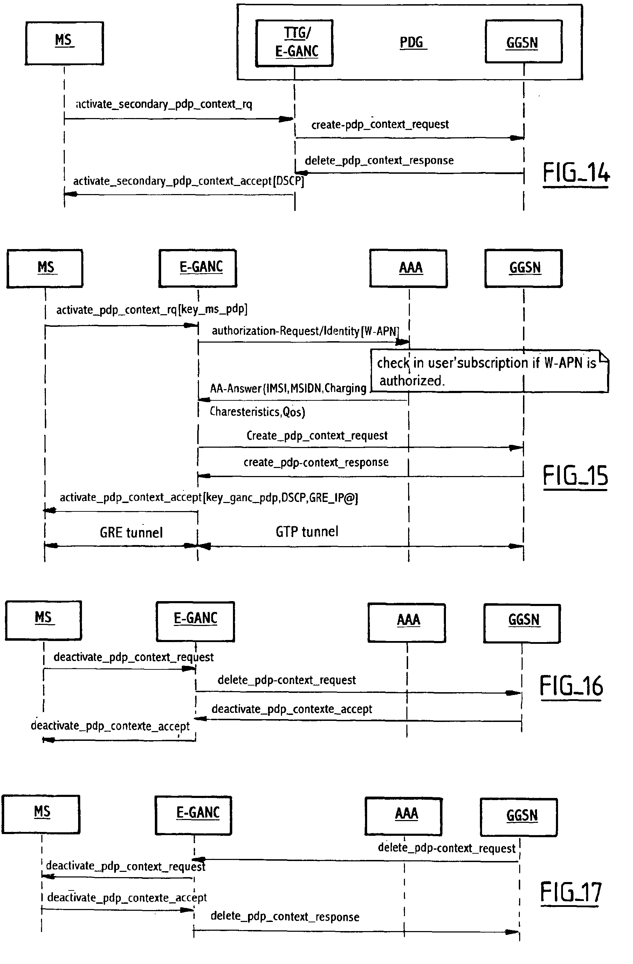

Figure 14 is intended to illustrate an example of Secondary PDP context activation procedure, according to the present invention,when the One Tunnel Mode is not used.

For that case there is no information related to a GRE tunnel provided by the MS. The procedure is as defined in 3GPP TS 24.008.

Figure 15 is intended to illustrate an example of PDP context activation procedure in the One Tunnel Mode according to the present invention.

That procedure differs from the PDP context activation procedure specified in the 3GPP TS 24.008, by the following modifications:
1. The MS requests the activation of the PDP context by filling the SM PDP context activate message as defined in 3GPP TS 24.008 with the following modification:
   a. Add the GRE Tunnel local reference (noted "key_ms_pdp" in figure 15)
   b. SAPI field can be set to any value, it is ignored by the E-GANC.
   The message is sent to W-SM signaling IP address returned during the IPSec tunnel setup on the wellknown UDP port reserved for it.
2. The E-GANC processes the user's authorization for the W-APN (the W-APN being indicated in the request sent by the MS) by using the Wm interface with the AAA service. The E-GANC sends a Authorization Request for that W-APN to AAA server that has been previously used to authenticate the MS.
3. If the MS is authorized for that W-APN, the AAA server sends back the following information:
   a. The subscriber Qos and bandwidth;
   b. The charging characteristics;
   c. Optionally the IP address of the MS in that W-APN. Note:
   If the user is not authorized, the E-GANC returns a PDP context reject message with the appropriate SM cause.
4. The E-GANC sets up a GTP-U tunnel with the GGSN. For that purpose, it initiates a PDP Context Create as defined in 3GPP TS 29.060. From a GGSN point of view, the E-GANC acts as a SGSN.
   Note:
   The IP address of the GGSN is resolved from the W-APN as a SGSN does.
5. When the PDP context has been created on the GGSN, the E-GANC sends a PDP context activate accept. Among the IE already defined within that message, the E-GANC appends:
   a. the key of the GRE tunnel on which is expected to receive the uplink traffic from the MS (noted "key_ganc_pdp" in figure 15);
   b. the IP address of the GRE tunnel (noted "GRE_IP @" in figure 15);
   c. the differentiated Service Code Point (DSCP). The DSCP code point should set in the Application and transport IP headers of the frame.

Figure 16 is intended to illustrate an example of procedure of PDP context deactivation from MS in the One Tunnel Mode according to the present invention.

The procedure remains the same as the one described in 3GPP TS 24.008 and 3GPP TS 29.060. The only difference is the deletion of the GRE tunnels (MS and E-GANC).

If the teardown indicator is set in the request all the GRE tunnels related to the same W-APN must be deleted.

Figure 17 is intended to illustrate an example of procedure of PDP context deactivation from Network in the One Tunnel Mode" according to the present invention.

The procedure remains the same as the one described in 3GPP TS 24.008 and 3GPP TS 29.060. The only difference is the deletion of the GRE tunnels (MS and E-GANC).

If the teardown indicator is set in the request all the GRE tunnels related to the same W-APN must be deleted.

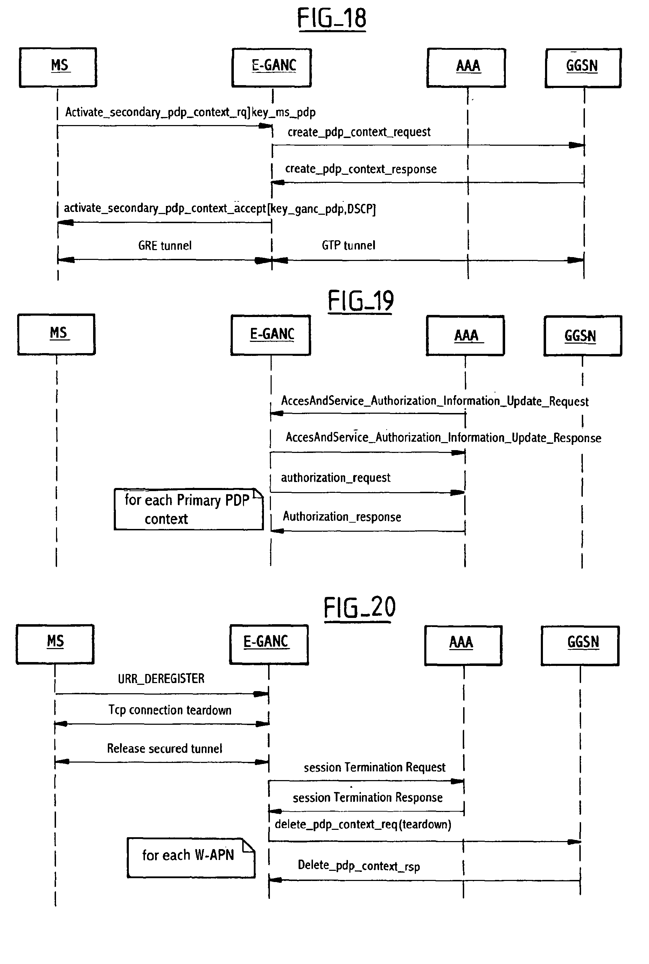

Figure 18 is intended to illustrate an example of Secondary PDP context eactivation procedure in the One Tunnel Mode according to the present invention.

In this case, there is no interaction with the AAA service since the E-GANC already knows the subscribers characteristics (Wm Authorization procedure).

The behaviour of the Secondary PDP Context Activation procedure remains the same as the one described in 3GPP TS 24.008 and 3GPP TS 29.060 with the following modification:
- The MS adds the GRE Tunnel local reference associated to the Secondary PDP context for the downlink traffic (noted "key_ms_pdp" in figure 18);
- The E-GANC sends back the key of the GRE tunnel on which is expected to receive the uplink traffic from the MS (noted "key_ganc_pdp" in figure 18) and the differentiated Service Code Point (DSCP) that should be set in the Transport IP header of the frames.

Figure 19 is intended to illustrate an example of WLAN subscriber profile change procedure in the One Tunnel Mode according to the present invention.

This procedure is used between the 3GPP AAA Server and the E-GANC and is used to modify the authorization parameters provided to the E-GANC. This may happen due to a modification of WLAN subscriber profile in the HSS.

That kind of procedure may request a re-authentication of the MS and/or a re-authorization. The figure above describes the case of the re-authorization procedure. For a re-authorization procedure only, the E-GANC initiates a authorization request (Wm interface) procedure for each active primary PDP context.

This can trigger one of the following procedures:
1. modify PDP context procedure
   o That procedure may be trigger due to a change of the Qos. On the MS side, the Modify PDP context procedure is the same as the one described in 3GPP TS 24.008, and on the GGSN side it corresponds to the Update PDP context procedure defined in 3GPP TS 29.060.
2. deactivation PDP context procedure
   o That procedure is triggered when the MS loses its authorization for the W-APN. The GRE tunnels and the GTP-U tunnels must be deleted. This corresponds, respectively, to the Deactivate PDP context procedure of 3GPP TS 24.008 and to the Delete PDP context procedure of 3GPP TS 29.060.

Figure 20 is intended to illustrate an example of UMA/GA de-registration procedure, according to the present invention.

When the MS performs the a UMA de-registration, the IPSec tunnel is deleted. The E-GANC, as defined in 3GPP TS 29.234 initiates a Session Termination procedure (Wm interface) with the 3GGP AAA server. Since the AAA server is deleting the session, the E-GANC must delete any pending PDP context created on the GGSN by using the procedure defined in 3GPP TS 29.060. The GRE tunnels are internally teardown by the E-GANC.

## Claims

1. A method for access to mobile PS services, by a Mobile Station (MS) in an Interworking - WLAN (I-WLAN) access mode, said method comprising a step of:
- providing QoS support by higher layer control protocol.

2. A method according to claim 1, comprising a step of:
- providing said QoS support by Session Management protocol.

3. A method according to claim 2, comprising a step of:
- providing said QoS support by PDP context management procedures.

4. A method according to any of claims 1 to 3, comprising a step of:
- indicating by the Network to the Mobile Station its capability regarding said QoS support.

5. A method according to any of claims 1 to 4, comprising a step of:
- indicating by the Mobile Station to the Network its capability regarding said QoS support.

6. A method according to any of claims 1 to 5, comprising a step of:
- indicating by the Network to the Mobile Station a signaling channel on which to perform signaling related to said QoS support.

7. A method according to any of claims 1 to 6, comprising a step of:
- tunneling said higher layer control protocol between said Mobile Station and a Packet Data Gateway (PDG) or Tunnel Termination Gateway (TTG).

8. A method according to any of claims 1 to 7, comprising a step of:
- providing said QoS support by performing PDP context modification procedure, where said PDP context corresponds to a PDP context implicitly activated as a result of performing W-APN activation procedure.

9. A method according to any of claims 1 to 7, comprising a step of:
- providing said QoS support by performing Secondary PDP context activation procedure, where a Primary PDP context corresponds to a PDP context implicitly activated as a result of performing W-APN activation procedure.

10. A method according to any of claims 4 to 6, comprising a step of:
- providing said indication during a W-APN activation procedure.

11. A method according to any of claims 1 to 6, for a Mobile Station supporting Interworking - WLAN (I-WLAN) access mode and Unlicensed Mobile Access (UMA) /Generic Access (GA) mode.

12. A method according to claim 11, comprising a step of:
- tunneling said higher layer control protocol between said Mobile Station and a Network Controller (UNC/GANC) of said UMA/GA Access Network.

13. A method according to claim 11 or 12, comprising a step of:
- providing said QoS support by PDP context activation procedure.

14. A method according to claim 13, wherein said procedure comprises the steps of:
- sending a request to a AAA server,
- receiving QoS information in response from said AAA server.

15. A method according to any of claims 11 to 14, comprising a step of:
- providing said QoS support by Secondary PDP context activation procedure.

16. A method according to any of claims 4 to 6, and 11, comprising a step of:
- providing said indication during set-up procedure of a unique secure tunnel for Interworking - WLAN (I-WLAN) access mode and Unlicensed Mobile Access (UMA) mode/Generic Access (GA) mode.

17. A method for access to mobile PS services, by a Mobile Station (MS)supporting Interworking - WLAN (I-WLAN) access mode and Unlicensed Mobile Access (UMA) mode/Generic Access (GA) mode, said method comprising a step of:
- establishing a unique secure tunnel for Interworking - WLAN (I-WLAN) access mode and Unlicensed Mobile Access (UMA) mode/Generic Access (GA) mode.

18. A method according to claim 17, comprising a step of:
- in Interworking - WLAN (I-WLAN) access mode, encapsulating traffic in a Generic Routing Encapsulation (GRE) tunnel that is carried inside said unique secure tunnel.

19. A method according to claim 17 or 18, wherein said secure tunnel corresponds to a IPSec tunnel.

20. A method according to claim 18 or 19, comprising a step of:
- indicating by the Network to the Mobile Station information related to GRE tunnel management.

21. A method according to claim 20, comprising a step of:
- providing said indication together with signaling related to QoS support.

22. A method according to claim 21, comprising a step of:
- providing said QoS support by higher layer control protocol.

23. A method according to claim 22, comprising a step of:
- providing said QoS support by Session Management protocol.

24. A method according to claim 23, comprising a step of:
- providing said QoS support by PDP context management procedures.

25. A method according to any of claims 11 to 24, comprising, in said Unlicensed Mobile Access (UMA) mode/Generic Access (GA) mode:
- a step of transferring user data packets using a tunnelling protocol over IP transport between UMA/GA Access Network and mobile network.

26. A method according to claim 25, comprising:
- a step of transferring user data packets using GPRS Tunnelling Protocol (GTP) over IP transport between a Network Controller (UNC/GANC) of said UMA/GA Access Network and a Gateway GPRS Support Node (GGSN) of said mobile Network.

27. A method according to claim 25 or 26, comprising:
- a step of terminating higher layer control protocols at said Network Controller, under the control of an Authentication Authorization Accounting (AAA) proxy/server.

28. A Mobile Station, comprising means for performing a method according to any of claims 1 to 27.

29. An entity of a Unlicensed Mobile Access Network (UMAN)/Generic Access Network (GAN) , comprising means for performing a method according to any of claims 1 to 27.

30. An entity of a mobile Network, comprising means for performing a method according to any of claims 1 to 27.
